Europäisches Patentamt

European Patent Office

Office européen des brevets

(19)

(11) Numéro de publication: 0 303 655
B1

(12) FASCICULE DE BREVET EUROPEEN

(45) Date de publication du fascicule du brevet: 27.12.90

(21) Numéro de dépôt: 88901859.4

(22) Date de dépôt: 16.02.88

(86) Numéro de dépót international:
PCT/FR88/00081

(87) Numéro de publication internationale:
WO 88/06239 25.08.88 Gazette 88/19

(51) Int. Cl.⁵: **F 03 B 1/00, F 03 B 3/12,
F 03 B 3/16, F 03 B 15/00**

(54) TURBINE CENTRIFUGE A ACTION.

(30) Priorité: 20.02.87 FR 8702251

(43) Date de publication de la demande:
22.02.89 Bulletin 89/08

(45) Mention de la délivrance du brevet:
27.12.90 Bulletin 90/52

(84) Etats contractants désignés:
CH DE FR IT LI

(56) Documents cités:
CH-A- 300 139
CH-A- 451 851

Patent Abstracts of Japan, vol 8 no. 116
(M-299)(1553, 30 Mai 1984

(73) Titulaire: BOUSSUGES, Pierre
4, rue Béranger
F-38000 Grenoble (FR)

(72) Inventeur: BOUSSUGES, Pierre
4, rue Béranger
F-38000 Grenoble (FR)

(74) Mandataire: Casalonga, Axel et al
BUREAU D.A. CASALONGA - JOSSE
Morassistrasse 8
D-8000 München 5 (DE)

Courier Press, Leamington Spa, England.

# Description

La présente invention se rapporte à une turbine centrifuge à action dans laquelle un écoulement centrifuge de fluide agit sur un rotor de manière à provoquer la rotation de ce dernier.

Une turbine de ce type est décrite dans le brevet CH—A—300139. Cette turbine comprend un conduit tubulaire cyclindrique qui est fermé par une paroi radiale d'extrémité, des passages de sortie étant prévus dans le paroi périphérique de ce conduit. Ce dernier est entouré par un obturateur qui est lui-même entouré par un rotor dont les augets présentent une dimension axiale largement supérieure à celle desdits passages. Cette turbine connue présente des inconvénients. En particulier, la structure de la partie d'extrémité du conduit engendre de très grandes pertes de charge et les jets formés ne sont pas guidés sur leurs côtés espacés axialement et ne peuvent être aérés qu'au travers du rotor à partir de la périphérie de ce dernier.

La présente invention a notamment pour but de remédier à ces inconvénients et propose une turbine centrifuge à action dont la structure lui permet d'atteindre des rendements élevés.

La turbine centrifuge à action faisant l'objet de la présente invention comprend un conduit axial d'amenée de fluide et un rotor annulaire à augets concentrique à ce conduit, dans laquelle sont formées des veines de fluide centrifuges déviées par rapport à la direction radiale de manière à produire des jets de fluide qui sont espacés dans le sens périphérique et qui traversent le rotor et agissent sur ses augets de manière à provoquer sa rotation.

Conformément à la présente invention, à l'extrémité dudit conduit d'amenée de fluide est prévu un distributeur concentrique audit rotor et dans lequel est ménagée une multiplicité de canaux convergents présentant chacun une ouverture d'entrée orientée vers le conduit d'amenée de fluide et une ouverture de sortie prévue à la périphérie du distributeur et dans lesquels se forment lesdites veines de fluide, ledit rotor à augets s'étendant à la périphérie du distributeur et à distance de sa surface périphérique de telle sorte que les jets espacés formés remplissent dans le sens axial ledit rotor et que l'espace séparant le distributeur et le rotor est ouvert dans le sens axial en vue de l'aération des jets.

Selon un autre objet de la présente invention, le rapport entre la distance circonférentielle séparant deux ouvertures périphériques de sortie adjacentes du distributeur multipliée par le nombre d'ouverture de sortie de ce distributeur et le périmètre de ce dernier est au moins égale à 0,3.

Selon un autre objet de la présente invention, les ouvertures périphériques de sortie du distributeur sont de section rectangulaire, le rapport entre la dimension de ces ouvertures dans le sens de l'axe du distributeur et leur dimension dans le sens périphérique étant au moins égale à 3.

Selon un autre objet de la présente invention, la section de chacun des canaux du distributeur est telle que l'écoulement du fluide est convergent depuis le conduit axial d'amenée de fluide jusqu'a leur ouverture périphérique de sortie. De préférence, le rapport entre leur section de sortie et la section du canal d'amenée est inférieur à 0,6.

Selon la présente invention, la partie d'extrémité avale desdits canaux d'écoulement du distributeur est de préférence de section rectangulaire.

Selon la présente invention, les parois opposées de la partie d'extrémité avale des canaux d'écoulement du distributeur, s'étendant selon l'axe de ce dernier, sont de préférence parallèles.

Selon la présente invention, les deux parois opposées de la partie d'extrémité avale des canaux d'écoulement du distributeur, décalées dans le sens de l'axe du distributeur sont convergentes en direction leur ouverture de sortie.

Selon un autre objet de la présente invention, la partie périphérique des canaux d'écoulement du distributeur, à leur entrée et dans la zone de formation et de déviation des veines de fluide dans ces canaux, est réalisée par un boudin torique.

Dans une variante de réalisation selon la présente invention, ledit rotor comprend deux couronnes entre lesquelles sont disposées ses augets.

Selon la présente invention, lesdites couronnes sont de préférence disposées de telle sorte que leurs surfaces en vis-à-vis se rapprochent de l'intérieur vers l'exérieur.

Selon la présente invention, les bords intérieurs desdites couronnes sont de préférence décalés par rapport aux bords opposés des ouvertures périphériques de sortie du distributeur, dans le sens de l'axe de ce dernier, de manière à présenter une dimension axiale supérieure à la dimension axiale des ouvertures de sortie du distributeur.

Selon la présente invention, les faces en vis-à-vis desdites couronnes du rotor sont de préférence sensiblement parallèles aux deux parois de la partie d'extrémité avale des canaux du distributeur, décalées dans le sens de l'axe de ce dernier.

Selon la présente invention, la paroi de la partie d'extrémité avale des canaux du distributeur, opposée à la conduite d'amenée de fluide, fait de préférence un angle compris entre 90 et 105° par rapport à l'axe du distributeur.

Selon un autre objet de la présente invention, la turbine comprend un obturateur disposé autour du distributeur et à distance du rotor et adapté pour s'étendre entre ces derniers, cet obturateur étant déplaçable de manière à régler la dimension des ouvertures de sortie des canaux d'écoulement du distributeur. Dans une première variante de réalisation, l'obturateur peut être prévu déplaçable dans le sens de l'axe du distributeur. Dans une autre variante de réalisation, ledit obturateur peut être prévu déplaçable par rotation, cet obturateur présentant des fenêtres au travers desquelles se forment les jets de fluide à la sortie desdits canaux du distributeur. De préférence, le sens de rotation de cet obturateur pour réduire la section des ouvertures de sortie est dans le sens de la rotation du rotor. Il peut par ailleurs être avantageux de prévoir des joints interposés entre l'obturateur et la surface périphérique du distributeur.

Selon un autre objet de la présente invention, ledit rotor comprend un plateau monté sur un axe, ce plateau étant à distance de la paroi du distributeur opposée à ladite conduite d'amenée de fluide, l'espace les séparant étant aéré ou ouvert.

Selon un autre objet de la présente invention, ladite turbine est disposée dans une enceinte présentant au moins une ouverture inférieure d'évacuation de fluide et adaptée de manière que le rotor ne soit pas noyé, cette enceinte étant munie d'une vanne permettant de régler la pression de l'air à l'intérieur de cette enceinte.

Selon une autre variante de réalisation, la turbine selon la présente invention comprend un obturateur cylindrique rotatif à paroi épaisse disposé autour du distributeur et à distance dudit rotor, cet obturateur comprenant des passages traversants dont les ouvertures d'entrée correspondent aux ouvertures de sortie des canaux du distributeur et qui prolongent ces derniers, les parois des passages de l'obturateur et des canaux du distributeur étant telles que, dans la première partie du mouvement de rotation de l'obturateur dans le sens qui réduit l'épaisseur périphérique de la veine de fluide, en particulier dans le premier tiers, l'écoulement des veines de fluide est convergent.

Notamment dans cette variante, les passages traversants dudit obturateur peuvent avantageusement comprendre chacun une ouverture d'entrée et une ouverture de sortie dont la première est décalée vers l'arrière par rapport à la deuxième, chacun desdits passages présentant, en face de l'ouverture de sortie correspondante des canaux du distributeur, une partie en creux par rapport à la surface intérieure cylindrique de l'obturateur qui en section radiale est arquée et une paroi opposée plane, cette paroi opposée et la paroi de ladite partie en creux prolongeant les parois correspondantes du canal du distributeur lorsque l'obturateur est en position d'ouverture.

De préférence, ladite partie en creux est en forme d'arc de cercle, le cercle portant cet arc de cercle passant par le bord intérieur de ladite paroi plane et cette paroi plane étant parallèle à la tangente d'extrémité de la paroi de ladite partie creuse.

La présente invention sera mieux comprise à l'étude de turbines centrifuges à action décrites à titre d'exemples non limitatifs et illustrés par le dessin sur lequel:

— la figure 1 représente une vue en élévation, partiellement en coupe, d'une turbine centrifuge à action selon la présente invention, à axe vertical, installée sur un site;

— la figure 2 représente une coupe méridienne verticale de la partie inférieure de la turbine représentée sur la figure 1, les canaux du distributeur étant en vue rabattue sur le plan méridien;

— la figure 3 représente, en coupe radiale selon III—III de la figure 2, la turbine de la figure 1;

— la figure 4 représente, en coupe méridienne radiale selon IV—IV de la figure 2, la turbine de la figure 1;

— la figure 5 représente une vue extérieure, partiellement en coupe, de la turbine de la figure 1, son rotor étant enlevé;

— la figure 6 représente une vue extérieure partiellement en coupe d'une seconde turbine centrifuge à action selon la présente invention, à axe horizontal;

— et la figure 7 représente une coupe méridienne d'une variante de réalisation d'un distributeur et d'un obturateur susceptible d'équiper l'une des turbines précitées, dans une position de pleine ouverture.

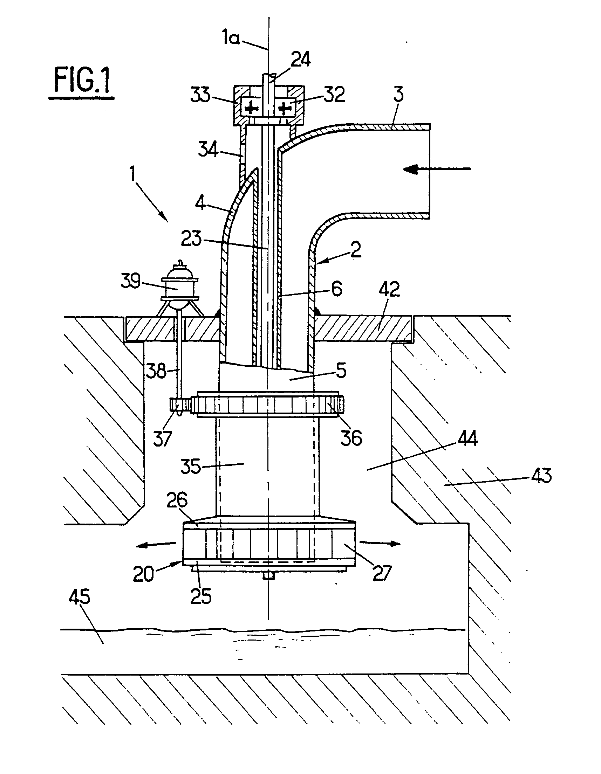

En se reportant aux figures 1 à 5, on voit que la turbine centrifuge à action représentée sur ces figures est reprérée d'une manière générale par la référence 1 est à axe 1a vertical et comprend un conduit cylindrique axial d'amenée d'un fluide tel que l'eau, repéré d'une manière générale par la référence 2, qui présente, dans le sens de l'écoulement de l'eau, une partie horizontale 3, un coude 4 et une partie verticale 5, ainsi qu'un cylindre intérieur coaxial et vertical 6 qui rejoint la surface extérieur de coude 4, l'eau s'écoulant verticalement de haut en bas, dans l'espace annulaire séparant la partie cylindrique verticale 5 du conduit 2 et le cylindre intérieur 6.

Les parties inférieures du conduit 2 et du cylindre intérieur 6 se terminent de manière à constituer un distributeur repéré du manière générale par la référence 7, dans lequel sont ménagés, dans l'exemple, sept canaux 8 en vue de la formation et de l'écoulement de sept veines de fluide, ces canaux 8 étant adaptés pour produire, entre leur ouverture d'entrée 10a tournée vers le conduit 2 et leur ouverture de sortie 10, une déviation centrifuge des veines de fluide formées, ces canaux étant réalisés de la manière suivante.

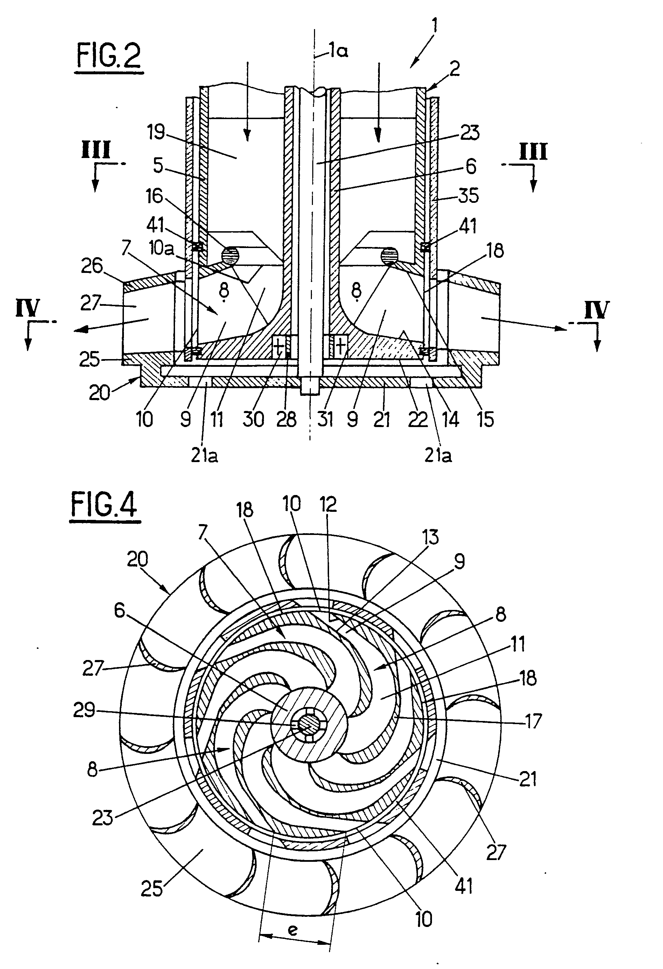

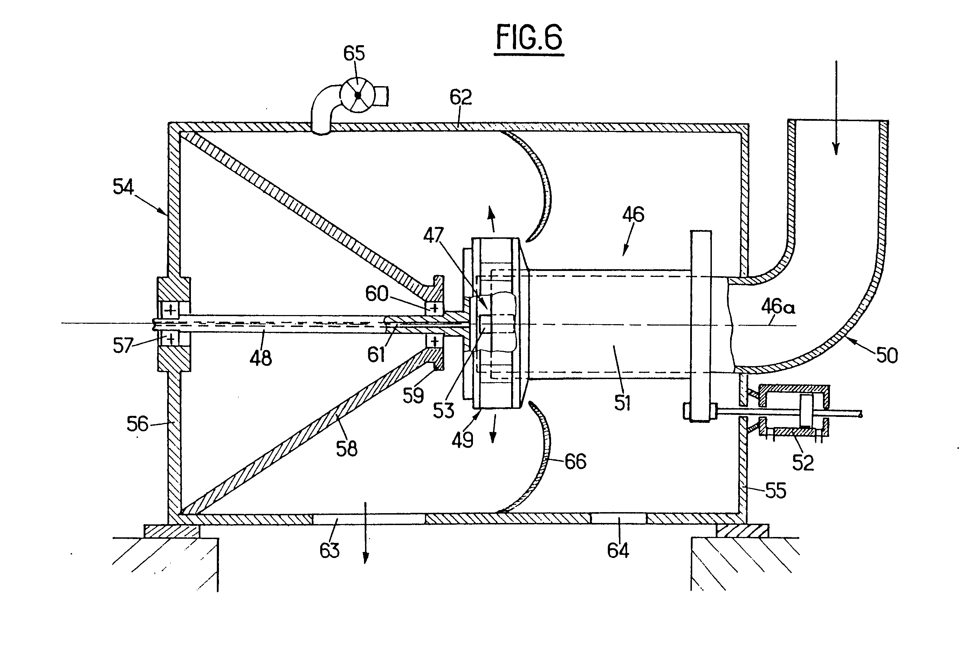

Comme on le voit bien sur les figures 2 et 4, les canaux 8 présentent, de l'aval vers l'amont, une partie d'extrémité avale 9 débouchant à la périphérie cylindrique de la partie verticale 5 du conduit 2, cette partie 9 étant fortement inclinée par rapport au plan radial passant par cette ouverture, ainsi qu'une partie 11 coudée vers le haut de manière à rejoindre l'espace intérieur séparant la conduite 2 du cylindre 6, ces parties successives 11 et 9 étant, dans le sens de l'écoulement, convergentes.

La partie d'extrémité avale 9 des canaux 8 est de section rectangulaire et présente deux parois verticales parallèles 12 et 13, une paroi inférieure 14 inclinée vers l'extérieure et vers le bas et faisant un angle compris entre 90° et 105° par rapport à l'axe 1a de la turbine et une paroi supérieure 15 plus fortement inclinée vers l'extérieur que la paroi inférieure 14 de telle sorte que cette partie d'extrémité avale 9 est convergente vers l'extérieur, son ouverture périphérique 10 étant rectangulaire et le rapport entre sa hauteur et sa largeur étant au moins égale à 3. A leur entrée 10a, la partie périphérique de la partie amont 11 des canaux 8, qui rejoint la paroi 15 de la partie d'extrémité avale 9, est formée par un boudin torique annulaire 16 qui s'étend dans l'espace séparant la partie cylindrique verticale 5 du conduit extérieur 2 et le cylindre intérieur 6 en un endroit permettant de respecter les lois de convergence de l'écoulement.

On voit, notamment sur la figure 4, que les canaux 11 sont successivement séparés par des cloisons 17 qui forment, sur la périphérie de la partie cylindrique verticale 5 de la conduite 2, et donc à la périphérie du distributeur 7, des surfaces périphériques cylindriques 18 séparant successivement les ouvertures de sortie 10 des canaux d'écoulement 8. Le rapport entre la distance circonférentielle e séparant deux ouvertures périphériques de sortie 10 adjacentes du distributeur 7 multipliée par le nombre n d'ouvertures de sortie 10 du distributeur 7 et le périmètre p de ce distributeur 7 est au moins égale à 0,3, soit: e fois $n/p > 0,3$.

Compte tenu de structure ci-dessus décrite, les veines d'eau qui se forment à l'entrée du distributeur 7 à partir du fluide arrivant par le conduit 2 et qui s'écoulent dans les canaux 8, sortent de manière centrifuge du distributeur 7 en formant des jets d'eau espacés dans le sens périphérique du distributeur 7, ces jets étant de section rectangulaire et beaucoup plus haut que large.

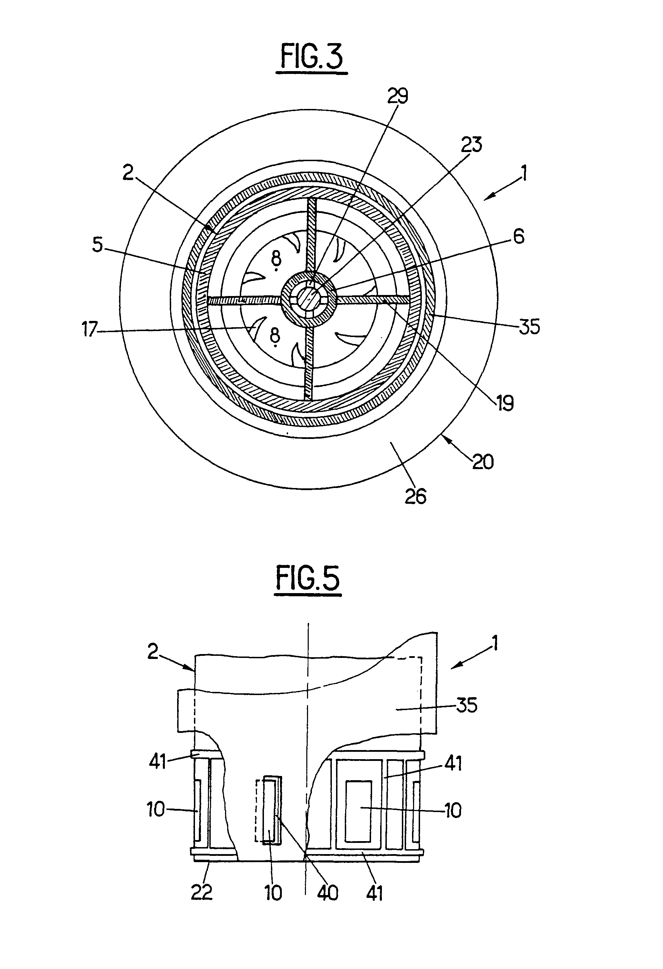

on voit en outre sur les figures 2 et 3 qu'au-dessus du boudin torique 16, dans l'exemple, quatre plaques verticales et radiales 19 joignent la partie cylindrique verticale 5 du conduit 2 et le cylindre intérieur 6, de manière à renforcer l'ensemble et conduire axialement l'eau.

La turbine 1 représentée sur les figures 1 à 5 comprend également un rotor repéré d'une manière générale par la référence 20.

Ce rotor 20 comprend un plateau radial 21 qui s'étend à distance de la face radiale d'extrémité inférieure 22 du distributeur 7 et qui est fixé sur l'extrémité d'un arbre de sortie 23 qui s'étend au travers du cylindre intérieur 6 et dont l'extrémité supérieure 24, qui s'étend à l'extérieur du conduit 2, peut être reliée à toute machine à entraîner.

Le rotor 20 comprend également, portés par la périphérie du plateau radial 21, une couronne inférieure 25 et une couronne supérieure 26 qui sont reliées par une multiplicité d'augets verticaux 27, dans l'exemple 12, disposés de manière à se trouver en face et à distance des ouvertures de sortie 10 des canaux 8 du distributeur 7. Les bords intérieurs des couronnes 25 et 26 sont à distance de la paroi périphérique du distributeur 7 et sont décalés le premier vers le bas et le second vers le haut par rapport aux bords inférieur et supérieur des ouvertures de sortie 10 des canaux 8. En outre, les faces en vis-à-vis des couronnes 25 et 26 sont inclinées sensiblement parallèlement aux parois inférieure et supérieure 14 et 15 de la partie d'extrémité avale 9 des canaux 8 et sont convergents de l'intérieur vers l'extérieur, les augets étant, dans l'exemple, à faces cylindriques de l'intérieur vers l'extérieur.

En se reportant aux figures 2 et 3, on voit que l'arbre 23 porte une bague 28 reliée à sa surface extérieure par des rayons 29, un roulement 30 étant disposés autour de cette bague 28 et à l'intérieur d'un évidement 31 ménagé dans la paroi d'extrémité 22 du distributeur 7. En se reportant à la figure 1, on voit en outre que l'extrémité supérieure 24 de l'arbre 23 est portée par un roulement 32 qui est monté dans une partie en saillie 33 du coude 4 du conduit 2, cette partie en saillie 33 présentant une ouverture de communication avec l'extérieur 34.

Il résulte de la description qui précède que les jets d'eau qui sortent du distributeur 7 par les ouvertures 10 des canaux 8, sensiblement horizontalement et inclinés par rapport à la surface périphérique du distributeur 7 attaquent les augets 27 du rotor 20 et provoquent la rotation de ce dernier, l'eau traversant l'espace déterminé par les couronnes 25 et 26, les jets d'eau étant séparés et atteignant le rotor 20 de manière indépendante et ces jets d'eau étant aérés d'une part dans le sens périphérique et d'autre part grâce à l'intervalle annulaire séparant le bord intérieur de la couronne supérieure 26 et la surface périphérique du distributeur 7 et grâce à l'espace séparant le bord intérieur de la couronne inférieure 25 et la surface périphérique du distributeur 7 qui est relié à l'air libre au travers de l'espace séparant le plateau 21 de la face inférieure 22 du distributeur 7, de l'espace séparant l'arbre 23 de la bague 28, de l'espace séparant l'arbre 23 de la face intérieure du cylindre intérieur 6 et par le passage 34 de la partie en saillie 33. De plus, afin d'améliorer cette aération des jets, le plateau 21 présente des orifices traversants 21a répartis sur sa surface.

La turbine 1 est en outre munie d'un obturateur 35 qui est constitué par un cylindre qui entoure la partie inférieure de la partie cylindrique verticale 5 du conduit 2 et qui s'étend entre le distributeur 7 et le rotor 20, les bords intérieurs des couronnes 25 et 26, étant à distance de la surface extérieure de l'obturateur 35 en vue de l'aération précitée. La partie supérieure de l'obturateur 35 est munie d'une couronne dentée 36 avec laquelle est en prise un pignon 37 qui est monté sur l'extrémité de l'arbre 38 d'un moteur d'entraînement 39. Comme on le voit bien sur la figure 5, l'obturateur 35 présente sept fenêtres 40 formées en correspondance aux ouvertures de sortie 10 des canaux 8 du distributeur 7 et de dimensions légèrement plus grandes, des joints d'étanchéité 41 étant interposés, autour des ouvertures de sortie 10, entre la paroi périphérique du distributeur 7 et la paroi intérieure de l'obturateur 35. Ainsi, grâce au moteur 38, on peut faire tourner autour de la partie cylindrique verticale 5 du conduit 2, et en conséquence autour du distributeur 7, l'obturateur 35 de manière à obturer plus ou moins, par recouvrement, les ouvertures de sortie 10 des canaux 8 du distributeur 7, en modifiant la largeur du passage dans lequel les jets d'eau vus précédemment se forment. De préférence, l'obturateur 35 vient recouvrir pour réduire le débit les ouvertures de sortie 10 en tournant dans le même sens que le rotor 20, c'est-à-dire dans le même sens que l'écoulement des jets.

Comme on le voit sur la figure 1, la turbine 1 est portée par une couronne support 42 qui est fixée sur la partie supérieure de la partie cylindrique verticale 5 de la conduite 2. Le bord périphérique de cette couronne 42 est en appui sur un socle 43 dans lequel est ménagé une colonne verticale creuse 44 et un canal d'écoulement horizontal 45 pour l'eau. L'espace intérieur de la colonne 44 et du canal 45 est largement supérieur à la dimension de la partie inférieure de la turbine 1 de manière à ne pas gêner l'évacuation des jets d'eau à la périphérie du rotor 20 et à leur aération. En outre, le canal horizontal d'écoulement 45 est conçu de telle sorte que le niveau d'eau à évacuer n'atteigne pas la partie inférieure du rotor 20, en particulier son plateau 21.

En se reportant maintenant à la figure 6, on va décrire une seconde turbine centrifuge à action repérée d'une manière générale par la référence 46 qui ne se différencie de la turbine décrite en référence aux figures 1 à 5 que par les particularités suivantes.

La turbine 46 est à axe 46a horizontal et ne présente plus de cylindre intérieur, la partie centrale de son distributeur 47 étant pleine. L'arbre de sortie 48 portant son rotor 49 s'étend à l'opposé de son conduit d'amenée d'eau 50. Son obturateur 51 est formé par un cylindre qui ne présente aucune fenêtre et qui est déplaçable axialement le long du conduit 50 et entre la paroi périphérique de son distributeur 47 et son rotor 49 grâce à un vérin 52. Le déplacement axial de cet obturateur 51 permet de régler la dimension dans le sens axial des ouvertures de sortie 53 des canaux d'écoulement de son distributeur 47 par recouvrement partiel de ces ouvertures.

De plus, la turbine 46 est disposée dans une enceinte fermée 54 qui présente une paroi 55 située au voisinage du coude du conduit d'amenée 50, une paroi opposée 56 qui est traversée par l'arbre 48 dans laquelle ce dernier est monté tournant grâce à un roulement 57, cette paroi 56 portant une paroi tronconique 58 s'étendant en direction de son rotor 49 dont la partie d'extrémité radiale 59 est également traversée par l'arbre 48 dans laquelle ce dernier est monté tournant par l'intermédiaire d'un roulement 60.

En vue de l'aération des jets d'eau sortant du distributeur 47 et allant vers le rotor 49, comme précédemment, l'arbre 48 présente cette fois un passage longitudinal central 61 relié à l'air libre.

En outre, l'enceinte 54 présente une enveloppe périphérique 62 située largement à distance de la turbine 46, cette enveloppe 62 présentant à sa partie inférieure des ouvertures d'évacuation de fluide 63 et 64 dont la dimension est telle que l'eau non encore évacué n'atteigne le bord périphérique inférieur du rotor 49. Dans l'enceinte 54, est en outre prévue une cloison annulaire 66 située du côté du conduit d'amenée 50, en face de la paroi tronconique 58, cette cloison étant en forme de déflecteur de manière à éviter tout renvoi d'eau sur le rotor 49.

De plus, sur l'enceinte 54 est branché un conduit muni d'une vanne 65 qui permet de régler la pression à l'intérieur de l'enceinte 54 et qui permet en particulier de créer une dépression favorisant l'écoulement de l'eau dans la turbine 46.

Bien entendu, la disposition de la turbine 46 de la figure 6 pourrait également êre appliquée à la turbine 1 des figures 1 à 5 de manière à provoquer une dépression dans la colonne creuse verticale 44 qui entoure son rotor 20. Dans ce cas, on pourrait prévoir une cloison d'obturation partielle du canal de sortie 45 et une vanne placée sur un conduit traversant la couronne support 42.

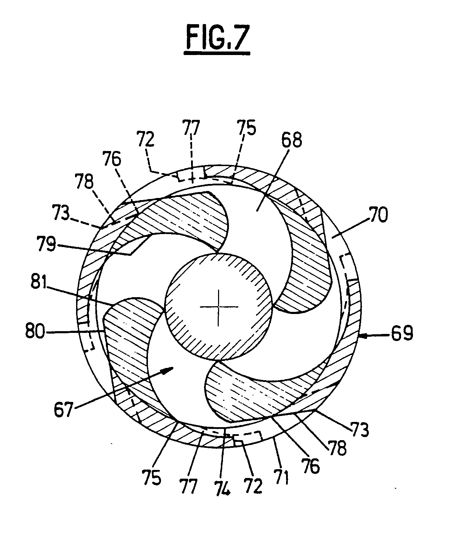

En se reportant à la figure 7, on voit qu'on a représenté une distributeur à surface extérieure cylindrique, repéré d'une manière générale par la référence 67, qui se différencie des distributeurs des exemples précédents par le fait qu'il comprend, dans l'exemple, quatre canaux 68 et qu'autour de ce distributeur 67, est prévu un obturateur cylindrique 69 à paroi épaisse dans lequel sont ménagés quatre passages traversants 70 correspondant aux quatre canaux 68 du distributeur 67. Cet obturateur cylindrique 69 est monté pivotant par exemple grâce aux mêmes moyens que l'obturateur 35 de l'exemple repréenté sur la figure 1, un rotor à augets non représenté étant disposé autour et à distance de l'obturateur 69 comme dans les exemples précédents.

Chaque passage 70 comprend une ouverture de sortie 71 présentant deux bords verticaux 72 et 73 et une ouverture d'entrée 74 qui, en considérant le sens de fermeture de l'obturateur 69, est, décalée vers l'arrière par rapport à l'ouverture de sortie 71 et qui présente deux bords verticaux 75 et 76.

Entre les bords arrière correspondant 72 et 75, chaque passage 70 comprend une partie creuse 77 en retrait par rapport à la surface intérieure cylindrique de l'obturateur 79, cette partie creuse 77 étant de section en forme d'arc de cercle dont le cercle portant cet arc passe par le bord vertical opposé 76 de l'ouverture d'entrée 71 du passage 70. Entre ses bords avant correspondants 73 et 76, chaque passage 70 comprend une paroi plane 78 opposée à sa partie creuse 77.

Sur la figure 7 dans laquelle l'obturateur 69 est en position de pleine ouverture, on voit que les bords verticaux 75 et 76 de l'ouveruture d'entrée de chaque passage 70 de l'obturateur 69 correspondent aux bords verticaux de l'ouverture de sortie de chaque canal 68 du distributeur 67. On voit également que la paroi en arc de cercle de chaque partie creuse 77 de chaque passage 70 prolonge la paroi concave 79 de chaque canal 68 du distributeur 67 et que la paroi plane 78 de chaque passage 70 prolonge une partie d'extrémité plane 80 de la paroi convexe 81 de chaque canal du distributeur 67, l'espace séparant ces parois 79 et 81 du distributeur 67 étant convergent.

De plus, dans l'exemple, les parois planes 78 et 80 sont parallèles à la tangente à la partie creuse 77, en son point d'extrémité, et le bord 72 est situé en face du milieu de l'ouverture d'entrée 74 du passage 70 et en face de la partie antérieure de la partie plane 80.

Il s'ensuit que le canal d'écoulement s'étendant entre d'une part la paroi 79 de chaque canal 68 du distributeur 67 et la paroi de la partie creuse 77 de chaque passage 70 de l'obturateur 69 et d'autre part la paroi 81 de chaque canal 68 du distributeur 67, dans sa partie située en amont de sa partie plane terminale 80 est convergent.

En outre, la forme de la partie terminale plane 80 de la paroi convexe 81 de chaque canal 68 du distributeur 67 et la forme de la paroi de la partie creuse 77 de chaque passage 70 de l'obturateur 69 sont telles que, lors de la première partie du mouvement de fermeture de l'obturateur 69, de préférence jusqu'au tiers de ce mouvement de fermeture, le canal qu'elles déterminent reste convergent afin d'éviter tout décollement du fluide s'écoulant et toute destructuration du jet qui se forme en sortie et de manière à pouvoir obtenir au moins dans cette première partie du mouvement de fermeture un réglage efficace du jet. Sur la figure 7, l'obturateur 69 est partiellement représenté, en pointillés, dans cette position.

Le distributeur tel qu'il vient d'être décrit en référence à la figure 7 est particulièrement bien adapté lorsque la turbine munie d'un tel distributeur fonctionne sous de hautes chutes.

## Revendications

1. Turbine centrifuge à action (1; 45) comprenant un conduit axial (2) d'amenée de fluide à l'extrémité duquel est prévu un distributeur (7) dans lequel est ménagée une multiplicité de canaux (8) présentant chacun une ouverture de sortie périphérique et dans lesquels se forment des veines de fluide centrifuges déviées par rapport à la direction radiale de manière à produire des jets de fluide qui sont espacés dans le sens périphérique, ainsi qu'un rotor annulaire (20) à augets concentrique au distributeur et traversé par les jets qui agissent sur ses augets de manière à provoquer sa rotation, caractérisée par le fait que lesdits canaux (8) du distributeur (7) présentent chacun une ouverture d'entrée (10a) orientée vers le conduit d'amenée de fluide et sont convergents en direction de leur ouverture de sortie et que ledit rotor (20) à augets s'étend à la périphérie du distributeur et à distance de sa surface périphérique (5) de telle sorte que les jets espacés formés remplissent dans le sens axial ledit rotor (20), l'espace séparant le distributeur (7) et le rotor (20) étant ouvert dans le sens axial en vue de l'aération des jets.

2. Turbine centrifuge selon la revendication 1, caractérisée par le fait que le rapport entre la distance circonférentielle séparant deux ouvertures périphériques de sortie adjacentes du distributeur multipliée par le nombre d'ouvertures de sortie du distributeur et le périmètre de ce dernier est au moins égale à 0,3.

3. Turbine centrifuge selon l'une des revendications précédentes, caractérisée par le fait que les ouvertures périphériques de sortie du distributeur sont de section rectangulaire, le rapport entre la dimension de ces ouvertures dans le sens de l'axe du distributeur et leur dimension dans le sens périphérique étant au moins égale à 3.

4. Turbine centrifuge selon l'une quelconque des revendications précédentes, caractérisée par le fait que la section de chacun desdits canaux du distributeur est telle que l'écoulement du fluide est convergent depuis le conduit axial d'amenée de fluide jusqu'à leur ouverture périphérique de sortie, le rapport entre la section de sortie desdits canaux et la section d'entrée du conduit d'amenée étant inférieur à 0,6.

5. Turbine centrifuge selon l'une quelconque des revendications précédentes, caractérisée par le fait que la partie d'extrémité avale (9) desdits canaux (8) du distributeur (7) est de section rectangulaire.

6. Turbine centrifuge selon l'une quelconque des revendications précédentes, caractérisée par le fait que les parois opposées (12, 13) de la partie d'extrémité avale des canaux du distributeur, s'étendant selon l'axe de ce dernier, sont parallèles.

7. Turbine centrifuge selon l'une des revendications 4 et 5, caractérisée par le fait que les deux parois opposées (14, 15) de la partie d'extrémité avale des canaux du distributeur, décalées dans le sens de l'axe du distributeur, sont convergentes en direction de leur ouverture de sortie.

8. Turbine centrifuge selon la revendication 7, caractérisée par le fait que la partie périphérique des canaux du distributeur, à leur entrée et dans la zone (11) de formation et de déviation des veines de fluide dans ces canaux, est réalisée par un boudin torique annulaire (16).

9. Turbine centrifuge selon l'une quelconque des revendications précédentes, caractérisée par le fait que le rotor (20) comprend deux couronnes (25, 26) entre lesquelles sont disposées ses augets (27).

10. Turbine centrifuge selon la revendication 9, caractérisée par le fait que lesdites couronnes (25, 26) sont disposées de telle sorte que leurs surfaces en vis-à-vis se rapprochent de l'intérieur vers l'extérieur.

11. Turbine centrifuge selon l'une des revendications 9 et 10, caractérisée par le fait que les bords intérieurs desdites couronnes (25, 26) sont décalés par rapport aux bords opposés des ouvertures périphériques de sortie (10) du distributeur (7), dans le sens de l'axe de ce dernier, de manière à présenter une dimension axiale supérieure à la dimension axiale des ouvertures de sortie (10) du distributeur (7).

12. Turbine centrifuge selon l'une quelconque des revendications précédentes, caractérisée par le fait que les faces en vis-à-vis desdites couronnes (25, 26) du rotor sont sensiblement parallèles aux deux parois de la partie d'extrémité avale des canaux du distributeur décalées dans le sens de l'axe de ce dernier.

13. Turbine centrifuge selon l'une quelconque des revendications précédentes, caractérisée par le fait que la paroi (14) de la partie d'extrémité avale (9) des canaux du distributeur, opposée à la conduite d'amenée de fluide, fait un angle compris entre 90 et 105° par rapport à l'axe du distributeur.

14. Turbine centrifuge selon l'une quelconque des revendications prédédentes, caractérisée par le fait qu'elle comprend un obturateur (35; 51) disposé autour du distributeur (7; 47) et à distance du rotor (20, 49) et adapté pour s'étendre entre ces derniers, cet obturateur étant déplacable de manière à régler la dimension des ouvertures de sortie (10; 53) des canaux du distributeur.

15. Tubrine centrifuge selon la revendication 14, caractérisée par le fait que ledit obturateur (51) est déplaçable dans le sens de l'axe du distributeur (47).

16. Turbine centrifuge selon la revendication 14, caractérisée par le fait que ledit obturateur (35) est déplaçable par rotation, cet obturateur présentant des fenêtres (40) au travers desquelles se forment les jets de fluide à la sortie (10) desdits canaux (8) du distributeur.

17. Turbine centrifuge selon la revendication 16, caractérisé par le fait que le sens de rotation dudit obturateur (35), pour réduire la section des ouvertures de sortie (10) du distributeur (7), est dans le sens de la rotation du rotor (20).

18. Turbine centrifuge selon l'une quelconque des revendications 14 à 16, caractérisée par le fait que des joints (41) sont interposés entre l'obturateur et la surface périphérique du distributeur.

19. Turbine centrifuge selon l'une quelconque des revendications précédentes, caractérisée par le fait que ledit rotor (20) comprend un plateau (21) monté sur un axe, ce plateau étant à distance de la paroi du distributeur opposée à ladite conduite d'amenée de fluide, l'espace les séparant étant aéré ou ouvert.

20. Turbine centrifuge selon l'une quelconque des revendications 1 à 18, caractérisée par le fait qu'elle est disposée dans une enceinte (54) présentant au moins une ouverture inférieure d'évacuation de fluide et adaptée de manière que le rotor (49) ne soit pas noyé, cette enceinte étant munie d'une vanne (65) permettant de régler la pression de l'air à l'intérieur de cette enceinte.

21. Turbine centrifuge selon l'une quelconque des revendications précédentes, caractérisée par le fait qu'elle comprend un obturateur cyclindrique rotatif (69) à paroi épaisse disposé autour du distributeur (67) et à distance dudit rotor, cet obturateur comprenant des passages traversants (70) dont les ouvertures d'entrée correspondent aux ouvertures de sortie des canaux (68) du distributeur et qui prolongent ces derniers, les parois des passages de l'obturateur et des canaux du distributeur étant telles que, dans la première partie du mouvement de rotation de l'obturateur dans le sens qui réduit l'épaisseur périphérique de la veine de fluide, en particulier dans le premier tiers, l'écoulement des veines de fluide est convergent.

22. Turbine centrifuge selon la revendication 21, caractérisée par le fait que les passages traversants (70) dudit obturateur comprennent chacun une ouverture d'entrée (74) et une ouverture de sortie (71) dont la première est décalée vers l'arrière par rapport à la deuxième, chacun desdits passages présentant, en face de l'ouverture de sortie correspondante des canaux (68) du distributeur, une partie (77) en creux par rapport à la surface intérieure cylindrique de l'obturateur qui, en section radiale, est arquée et une paroi opposée plane (78), cette paroi opposée et la paroi de ladite partie en creux prolongeant les parois correspondantes (79, 81) du canal du distributeur lorsque l'obturateur est en position d'ouverture.

23. Turbine centrifuge selon la revendication 22, caractérisée par le fait qu'en section radiale, ladite partie en creux (77) est en forme d'arc de cercle, le cercle portant cet arc de cercle passant par le bord intérieur (76) de ladite paroi plane (78) et cette paroi plane étant parallèle à la tangente d'extrémité de la paroi de ladite partie creuse (77).

**Patentansprüche**

1. Zentrifugal-Aktionsturbine (1; 45), die einen axialen (2) Fluideinlaßkanal aufweist, an dessen Ende eine Leitapparat (7) angeordnet ist, in dem eine Anzahl Kanäle (8) ausgebildet sind, von denen jeder eine umfangsseitige Auslaßöffnung aufweist und in denen sich zentrifugale Fluidströme ausbilden, die bezüglich der Radialrichtung derart abgelenkt sind, daß sich Fluidstrahlen ergeben, die in Umfangsrichtung voneinander beabstandet sind und die Außerdem einern ringförmigen, mit Schaufeln bestückten Rotor (20) aufweist, der konzentrisch zu dem Leitapparat angeordnet und von den Strahlen durchströmt ist, die auf die Schaufeln im Sinne der Erzeugung einer Drehbewegung einwirken, dadurch gekennzeichnet, daß die Kanäle (8) des Leitapparates (7) jeweils eine zu dem Fluideinlaßkanal hin weisende Einlaßöffnung (10a) aufweisen und in Richtung auf ihre Auslaßöffnung zu konvergierend ausgebildet sind und daß der mit Schaufeln bestückte Rotor (20) sich am Umfang des Leitapparates sowie im Abstand von dessen Umfangsfläche (5) derart erstreckt, daß die beabstandeten, geformten Strahlen den mit Schaufeln bestückten Rotor (20) in Axialrichtung ausfüllen, wobei der den Leitapparat (7) und den Rotor (20) voneinander trennende Zwischenraum zur Belüfung der Strahlen in Axialrichtung offen ist.

2. Zentrifugalturbine nach Anspruch 1, dadurch gekennzeichnet, daß das Verhältnis zwischen dem zwei benachbarte umfangsseitige Auslaßöffnungen des Leitapparates in Umfangsrichtung voneinander trennenden Zwischenraum, multipliziert mit der Zahl der Auslaßöffnungen des Leitapparates, und dem Umfang des letzteren wenigstens gleich 0,3 ist.

3. Zentrifugal-Turbine nach einem der vorhergehenden Ansprüche, dadurch gekennzeichnet, daß die umfangsseitigen Auslaßöffnungen des

Leitapparates eine rechteckige Querschnittsgestalt aufweisen und daß das Verhältnis zwischen der in Achsrichtung des Leitapparates gemessenen Abmessung dieser Öffnungen und deren Abmessung in Umfangsrichtung jeweils wenigstens gleich 3 ist.

4. Zentrifugal-Turbine nach einem der vorhergehenden Ansprüche, dadurch gekennzeichnet, daß die Querschnittsgestalt jedes der Kanäle des Leitapparates derart ausgebildet ist, daß die Fluidströmung von dem axialen Fluideinlaßkanal bis zur jeweiligen umfangsseitigen Auslaßöffnung konvergierend ist und daß das Verhältnis zwischen dem Auslaßquerschnitt der Kanäle und dem Einlaßquerschnitt des Einlaßkanals kleiner 0,6 ist.

5. Zentrifugal-Turbine nach einem der vorhergehenden Ansprüche, dadurch gekennzeichnet, daß der strömungsabwärts gelegene Endbereich (9) der Kanäle (8) des Leitapparates (7) eine rechteckige Querschnittsgestalt aufweist.

6. Zentrifugal-Turbine nach einem der vorhergehenden Ansprüche, dadurch gekennzeichnet, daß die einander gegenüberstehenden Wände (12, 13) des strömungsabwärts gelegenen Endbereiches der Kanäle des Leitapparates, die sich in Achsrichtung des Leitapparates erstrecken, zueinander parallel sind.

7. Zentrifugal-Turbine nach einem der Ansprüche 4 oder 5, dadurch gekennzeichnet, daß die beiden einander gegenüberstehenden Wände (14, 15) des strömungsabwärts gelegenen Endbereiches der Kanäle des Leitapparates, die in Achsrichtung des Leitapparates gegeneinander versetzt sind, in Richtung auf ihre Auslaßöffnung zukonvergieren.

8. Zentrifugal-Turbine nach Anspruch 7, dadurch gekennzeicnhnet, daß der Umfangsbereich der Kanäle des Leitapparates an deren Einlaß und in dem Bereich (11) der Ausbildung und Ablenkung der Fluidströme in den Kanälen durch eine torusförmige Ringwulst (16) gebildet ist.

9. Zentrifugal-Turbine nach einem der vorhergehenden Ansprüche, dadurch gekennzeichnet, daß der Rotor (20) Deckscheiben (25, 26) aufweist, zwischen denen die Schaufeln (27) angeordnet sind.

10. Zentrifugal-Turbine nach Anspruch 9, dadurch gekennzeichnet, daß die Deckscheiben (25, 26) derart angeordnet sind, daß ihre einander gegenüberliegenden Flächen von innen nach außen zu sich einander annähern.

11. Zentrifugal-Turbine nach einem der Ansprüche 9 oder 10, dadurch gekennzeichnet, daß die innenliegenden Berandungen der Deckscheiben (25, 26) bezüglich der gegenüberliegenden Berandungen der umfangsseitigen Auslaßöffnungen (10) des Leitapparates (7) in Achsrichtung desselben derart versetzt sind, daß ihr axialer Abstand größer ist als die axiale Abmessung der Auslaßöffnungen (10) des Leitapparates (7).

12. Zentrifugal-Turbine nach einem der vorhergehenden Ansprüche, dadurch gekennzeichnet, daß die einander gegenüberliegenden Flächen der Deckscheiben (25, 26) des Rotors im wesentlichen parallel zu den beiden Wänden des strömungsabwärts gelegenen Endbereichs der Kanäle des Leitapparates sind, die in dessen Achsrichtung gegeneinander versetzt sind.

13. Zentrifugal-Turbine nach einem der vorhergehenden Ansprüche, dadurch gekennzeichnet, daß die dem Fluideinlaßkanal gegenüberliegende Wand (14) des strömungsabwärtsgelegenen Endbereichs (9) der Kanäle des Leitapparates mit der Achse des Leitapparates einen Winkel zwichen 90 und 105° einschließt.

14. Zentrifugal-Turbine nach einem der vorhergehenden Ansprüche, dadurch gekennzeichnet, daß sie ein den Leitapparat (7; 47) umgebendes und im Abstand zu dem Rotor (20, 49) angeordnetes Absperrorgan (35, 51) aufweist, das zwischen den vorgenannten Teilen sich erstrekken kann, und daß das Absperrorgan im Sinne der Einstellung der wirksamen Größe der Auslaßöffnungen (10; 53) der Kanäle des Leitapparates verstellbar ist.

15. Zentrifugal-Turbine nach Anspruch 14, dadurch gekennzeichnet, daß das Absperrorgan (51) in Achsrichtung des Leitapparates (47) verstellbar ist.

16. Zentrifugal-Turbine nach Anspruch 14, dadurch gekennzeichnet, daß das Absperrorgan (35) durch eine Drehbewegung verstellbar ist, und daß das Absperrorgan Fensteröffnungen (40) aufweist, durch die sich die Fluidstrahlen am Ausgang (10) der Kanäle (8) des Leitapparates formen.

17. Zentrifugal-Turbine nach Anspruch 16, dadurch gekennzeichnet, daß der Drehsinn des Absperrorgans (35) zur Verkleinerung der Querschnittsfläche der Auslaßöffnungen (10) des Leitapparates (7) in Drehrichtung des Rotors (20) weist.

18. Zentrifugal-Turbine nach einem der Ansprüche 14 bis 16, dadurch gekennzeichnet, daß zwischen den Absperrorgan und der Umfangsfläche des Leitapparates Dichtungen (41) angeordnet sind.

19. Zentrifugal-Turbine nach einem der vorhergehenden Ansprüche, dadurch gekennzeichnet, daß der Rotor (20) eine auf einer Welle sitzende Scheibe (21) aufweist, wobei die Scheibe im Abstand von der dem Fluideinlaßkanal gegenüberliegenden Wand des Leitapparates steht und der diese Teile trennende Zwischenraum belüftet oder offen ist.

20. Zentrifugal-Turbine nach einem der Ansprüche 1 bis 18, dadurch gekennzeichnet, daß sie in einem umschließenden Gehäuse (54) angeordnet ist, das wenigstens eine untere Fluidauslaßöffnung aufweist und derart ausgebildet ist, daß der Rotor (49) nicht untertaucht, und daß das Gehäuse mit einem Ventil (65) versehen ist, das eine Regelung des Luftdrucks im Inneren des Gehäuses erlaubt.

21. Zentrifugal-Turbine nach einem der vorhergehenden Ansprüche, dadurch gekennzeichnet, daß sie ein dünnwandiges, zylindrisches, drehbares Absperrorgan (69) aufweist, das den Leitapparat (67) umgebend und im Abstand von dem Rotor angeordnet ist, wobei das Absperrorgan Durchlässe (70) aufweist, deren Einlaßöffnungen den Auslaßöffnungen der Kanäle (68) des Leitapparates entsprechen und diese verlängern, und daß die Wände der Kanäle des Absperrorgans sowie der Kanäle des Leitapparates derart ausgebildet sind, daß während des ersten Teils, insbesondere des ersten Drittels der Drehbewegung des Absperrorgans in dem die in Umfangsrichtung gemessene Breite der Fluidströmung verkleinernden Sinne, der Verlauf der Fluidstromfäden konvergierend ist.

22. Zentrifugal-Turbine nach Anspruch 21, dadurch gekennzeichnet, daß die Durchlässe (70) des Absperrorgans jeweils eine Einlaßöffnung (74) und eine Auslaßöffnung (71) aufweisen, von denen die erstgenannte nach hinten zu gegenüber der zweitgenannten versetzt ist, wobei jeder der Durchlässe der entsprechenden Auslaßöffnung der Kanäle (68) des Leitapparates gegenüberliegend einen bezüglich der zylindrischen Innenfläche des Absperrorgans vertieften Teil, der im radialen Querschnitt bogenförmig gekrümmt ist, sowie eine gengenüberliegende ebene Wand (78) aufweist, und daß die gegenüberliegende Wand und die Wandung des vertieften Teils die entsprechenden Wände (79, 81) des jeweiligen Kanals des Leitapparates bei in der geöffneten Stellung stehendem Absperrorgan verlängern.

23. Zentrifugal-Turbine nach Anspruch 22, dadurch gekennzeichnet, daß der vertiefte Teil (77) im radialen Querschnitt eine kreisbogenförmige Gestalt aufweist, wobei der diesen Kreisbogen enthaltende Kreis durch den inneren Rand (76) der ebenen Wand (78) verläuft und diese ebene Wand parallel zu der Tangente an das Ende der Wandung des vertieften Teiles (77) ist.

## Claims

1. Centrifugal action turbine (1; 45) comprising an axial fluid supply conduit (2), at the end of which there is a distributor (7), in which is made a multiplicity of channels (8) which each possess a peripheral outlet orifice and in which are formed centrifugal fluid streams deflected relative to the radial direction so as to generate fluid jets spaced peripherally, and an annular bucket rotor (20) which is concentric relative to the distributor and through which pass the jets acting on its buckets so as to cause it to rotate, characterized in that the said channels (8) of the distributor (7) each possess an inlet orifice (10a) directed towards the fluid supply conduit and are convergent in the direction of their outlet orifice, and in that the said bucket rotor (20) extends on the periphery of the distributor and at a distance from its peripheral surface (5), in such a way that the spaced jets formed fill the said rotor (20) in the axial direction, the space separating the distributor (7) and the rotor (20) being open in the axial direction for the purpose of the aeration of the jets.

2. Centrifugal turbine according to Claim 1, characterized in that the ratio between the circumferential distance separating two adjacent peripheral outlet orifices of the distributor, multiplied by the number of outlet orifices of the distributor, and the perimeter of the latter is at least equal to 0.3.

3. Centrifugal turbine according to one of the preceding claims, characterized in that the peripheral outlet orifices of the distributor are of rectangular cross-section, the ratio between the dimension of these orifices in the axial direction of the distributor and their dimension in the peripheral direction being at least equal to 3.

4. Centrifugal turbine according to any one of the preceding claims, characterized in that the cross-section of each of the said channels of the distributor is such that the flow of the fluid is convergent from the axial fluid supply conduit to their peripheral outlet orifice, the ratio between the outlet cross-section of the said channels and the inlet cross-section of the supply conduit being below 0.6.

5. Centrifugal turbine according to any one of the preceding claims, characterized in that the downstream end part (9) of the said channels (8) of the distributor (7) is of rectangular cross-section.

6. Centrifugal turbine according to any one of the preceding claims, characterized in that the mutually opposite walls (12, 13) of the downstream end part of the channels of the distributor, extending in the axis of the latter, are parallel.

7. Centrifugal turbine according to one of Claims 4 and 5, characterized in that the two mutually opposite walls (14, 15) of the downstream end part of the channels of the distributor, which are offset in the axial direction of the distributor, are convergent in the direction of their outlet orifice.

8. Centrifugal turbine according to Claim 7, characterized in that the peripheral part of the channels of the distributor, at their inlet and in the zone (11) for the formation and deflection of the fluid streams in these channels, is obtained by means of an annular toroidal coil (16).

9. Centrifugal turbine according to any one of the preceding claims, characterized in that the rotor (20) comprises two rings (25, 26), between which its buckets (27) are arranged.

10. Centrifugal turbine according to Claim 9, characterized in that the said rings (25, 26) are arranged in such a way that their mutually confronting surfaces approach one another from the inside outwards.

11. Centrifugal turbine according to one of Claims 9 and 10, characterized in that the inner edges of the said rings (25, 26) are offset relative to the opposite edges of the peripheral outlet orifices (10) of the distributor (7) in the axial direction of the latter, so as to have an axial dimension larger than the axial dimension of the outlet orifices (10) of the distributor (7).

12. Centrifugal turbine according to any one of the preceding claims, characterized in that the mutually confronting faces of the said rings (25, 26) of the rotor are subtantially parallel to those two walls of the downstream end part of the channels of the distributor which are offset in the axial direction of the latter.

13. Centrifugal turbine according to any one of the preceding claims, characterized in that the wall (14) of the downstream end part (9) of the channels of the distributor which is opposite the fluid supply conduit forms an angle of between 90 and 105° relative to the axis of the distributor.

14. Centrifugal turbine according to any one of the preceding claims, characterized in that it comprises a shutter (35; 51) arranged round the distributor (7; 47) and at a distance from the rotor (20, 49) and designed to extend between these, this shutter being displaceable so as to adjust the dimension of the outlet orifices (10; 53) of the channels of the distributor.

15. Centrifugal turbine according to Claim 14, characterized in that the said shutter (51) is displaceable in the axial direction of the distributor (47).

16. Centrifugal turbine according to Claim 14, characterized in that the said shutter (35) is displaceable by rotation, this shutter having apertures (40), through which the fluid jets form at the outlet (10) of the said channels (8) of the distributor.

17. Centrifugal turbine according to Claim 16, characterized in that the direction of rotation of the said shutter (35) for reducing the cross-section of the outlet orifices (10) of the distributor (7) is in the direction of the rotation of the rotor (20).

18. Centrifugal turbine according to any one of Claims 14 to 16, characterized in that gaskets (41) are interposed between the shutter and the peripheral surface of the distributor.

19. Centrifugal turbine according to any one of the preceding claims, characterized in that the said rotor (20) comprises a plate (21) mounted on an axle, this plate being at a distance from that wall of the distributor which is opposite the said fluid supply conduit, the space separating them being aerated or open.

20. Centrifugal turbine according to any one of Claims 1 to 18, characterized in that it is arranged in an enclosure (54) possessing at least one lower fluid discharge orifice and designed so that the rotor (49) is not submerged, this enclosure being equipped with a valve (65) making it possible to adjust the pressure of the air inside this enclosure.

21. Centrifugal turbine according to any one of the preceding claims, characterized in that it comprises a thick-walled cylindrical rotary shutter (69) arranged round the distributor (67) and at a distance from the said rotor, this shutter comprising through-passages (70), the inlet orifices of which correspond to the outlet orifices of the channels (68) of the distributor and which extend these, the walls of the passages of the shutter and of the channels of the distributor being such that, in the first part of the rotational movement of the shutter in the direction reducing the peripheral thickness of the fluid stream, especially in the first third, the flow of the fluid streams is convergent.

22. Centrifugal turbine according to Claim 21, characterized in that the through-passages (70) of the said shutter each comprise an inlet orifice (74) and an outlet orifice (71), the first of which is offset rearwards relative to the second, each of the said passages possessing, opposite the corresponding outlet orifice of the channels (68) of the distributor, a part (77) which is recessed relative to the cylindrical inner surface of the shutter and which, in radial cross-section, is arcuate, and a plane opposite wall (78), this opposite wall and the wall of the said recessed part extending the corresponding walls (79, 81) of the channel of the distributor when the shutter is in the opening position.

23. Centrifugal turbine according to Claim 22, characterized in that, in radial cross-section, the said recessed part (77) is in the form of an arc of a circle, the circle which bears this circle arc passing through the inner edge (76) of the said plane wall (78), and this plane wall being parallel to the end tangent of the wall of the said recessed part (77).

## FIG.1

EP 0 303 655 B1

FIG.2

FIG.4

2

## FIG.3

## FIG.5

FIG.6

# FIG.7